# EUROPEAN PATENT APPLICATION

(11) **EP 4 811 116 A1**
(43) Date of publication of application: **23.09.2026**
(21) Application number: 25164572.7
(22) Date of filing: 18.03.2025
(51) Int. Cl.: G06F 8/41, G06F 8/71, G06F 8/73, G06F 8/75, G06N 3/0475, G06N 20/00

(54) **LEVERAGING GENERATIVE AI AND LARGE LANGUAGE MODELS FOR ORGANISING AND ANALYSING CODEBASES**

(71) Applicant: Xebia Group B.V., 1213 VB Hilversum (NL)
(72) Inventor: Sahay, Anand Kumar, 1213 VB Hilversum (NL); Nelson, Glory, 1213 VB Hilversum (NL); Panjwani, Noorain Nooruddin, 1213 VB Hilversum (NL); Verma, Mayank, 1213 VB Hilversum (NL); Bhatnagar, Rishabh, 1213 VB Hilversum (NL); Paul, Abhinish, 1213 VB Hilversum (NL)
(74) Representative: De Vries & Metman

(57) **Abstract**

Methods and systems for organising a codebase comprising one or more source code files are described wherein the method comprises: parsing the one or more source code files and generating one or more trees, wherein each tree comprises nodes representing different syntactic categories, including at least one of: function definitions, expressions, statements, class definitions or module definitions, wherein parsing is performed using one or more language-specific parsers; traversing each tree to extract metadata for one or more nodes within the tree and constructing a dependency graph based on a portion of the extracted metadata, the dependency graph comprising one or more graph nodes and relationships between the graph nodes within the codebase; associating one or more graph nodes with the extracted metadata, wherein the extracted metadata comprises behavioural context for the corresponding graph node; generating a summary for one or more graph nodes using one or more generative Al models by recursively integrating the metadata of a current graph node and summaries of dependent graph nodes, wherein dependent graph nodes represent nodes within the dependency graph that the current graph node interacts with; and organising the codebase based on the generated summaries, wherein the generated summaries are stored in a structured repository that preserves the relationships and context of the codebase elements defined by the graph nodes.

## Description

### Technical field

The embodiments of the present disclosure relate to organising codebases and, in particular, though not exclusively, to methods and systems for organising codebases to assist stakeholders in analysing the codebase, and a computer program product enabling a computer system to perform such methods.

### Background

A software codebase represents a structured collection of source code files, configuration files, dependencies, and metadata that define the behaviour and functionality of a software system. A codebase serves as the foundation for software development, , ranging from small scripts to large-scale enterprise systems. Over time, these codebases tend to grow in complexity, often incorporating multiple programming languages, libraries, and frameworks. As a result, maintaining, understanding, and modifying codebases becomes increasingly challenging.

Several factors contribute to these difficulties. Code comprehensibility is often hindered by unclear structures, insufficient documentation, and inconsistent coding practices. Dependency management becomes problematic as software modules rely on external libraries, APIs, or internal functions whose relationships are not always well-documented. Integration challenges arise when adapting codebases to evolving technology stacks, requiring modifications that may have unintended consequences due to hidden dependencies.

Various approaches have been developed to address these challenges and assist in the development of source code programs. Static code analysis techniques, such as Abstract Syntax Tree (AST) parsing, are commonly employed to extract syntactic and semantic features from code. For instance, EP4127913 describes a data mining technique that is used to find large frequently-occurring source code patterns from methods/APIs that can be used in code development. Simplified trees that represent the syntactic structure and type and method usage of a source code fragment, such as a method, are mined to find closed and maximal frequent subtrees which represent the largest frequently-occurring source code patterns or idioms associated with a particular type and method usage. These idioms are then used in an idiom web service and/or a code completion system to assist users in the development of source code programs.

Thus, the system in EP4127913 focuses on detecting and reusing frequently occurring code patterns, which not fully addresses the challenges of comprehensive codebase analysis. Codebases often involve complex, interdependent modules and poorly documented logic that cannot be adequately captured or represented by frequent patterns alone. Additionally, the mining process tends to generate a high volume of patterns, many of which may be redundant or lack contextual relevance, making it difficult to extract meaningful insights for code comprehension, refactoring, or impact analysis. Consequently, the system's reliance on pattern detection limits its ability to address the broader challenges of analysing the structure, dependencies, and functionality of codebases.

Machine learning-based solutions, including probabilistic and transformer-based models, have also been utilized to assist developers through automated code completion and code generation. For example, EP4007951 describes a multi-lingual line-of-code completion system that is used to generate the most likely candidates to complete a line of source code during a source code editing session. The system uses a model trained using a conditional language modelling objective on a large unsupervised dataset that includes source code programs written in different programming languages (e.g., C, Java, Python, C++) to predict an ordered sequence of code elements. Each source code program in the training dataset is encoded into a sequence composed of tokens and/or subtokens. The multi-lingual line-of-code completion system is based on a neural transformer model. The transformer model leverages positional embeddings and a beam search algorithm to generate a ranked list of candidate code completions.

While the method described in EP4007951 may be effective for assisting developers with code completion, it has several limitations in the context of analysing and navigating complex codebases. The focus of the system is on generating individual line completions rather than comprehensively analysing code structures or dependencies across an entire codebase. It does not model interactions between modules, functions, or data structures, which are necessary for code comprehension and refactoring. Additionally, the beam search approach prioritizes localised syntactic predictions rather than providing context-aware insights into the broader functionality or architecture of the codebase. As a result, while EP4007951 may aid in improving developer productivity for new code development, it provides limited support for maintaining, refactoring, understanding potentially outdated and undocumented codebases.

Hence, from the above, it follows that there is a need in the art for improved methods that are scalable, accurate, and user-friendly, enabling better understanding of codebases and data pipelines to assist developers and other stakeholders in the development of source code programs.

### Summary

Aspects of this disclosure aim to provide methods and systems for organising codebases to assist stakeholders in analysing the codebase, and a computer program product enabling a computer system to perform such methods.

One aspect of the disclosure relates to a computer-implemented method for organising a codebase comprising one or more source code files. The method comprises parsing the one or more source code files and generating one or more trees, wherein each tree comprises nodes representing different syntactic categories, including at least one of: function definitions, expressions, statements, class definitions or module definitions. The parsing may be performed using one or more language-specific parsers; traversing each tree to extract metadata for one or more nodes within the tree and constructing a dependency graph based on a portion of the extracted metadata. The dependency graph may comprise one or more graph nodes and relationships between the graph nodes within the codebase. The method may further include a step of associating one or more graph nodes with the extracted metadata. The extracted metadata may comprise behavioural context for the corresponding graph node. The method may further comprise generating a summary for one or more graph nodes using one or more generative Al models by recursively integrating the metadata of a current graph node and summaries of dependent graph nodes. Dependent nodes represent nodes within the dependency graph that the current graph node interacts with. The method may also involve a step of organising the codebase based on the generated summaries, wherein the generated summaries are stored in a structured repository that preserves the relationships and context of the codebase elements defined by the graph nodes.

Once stored in a structured repository, the organised codebase enables developers and business stakeholders to interact with the codebase in an fast, accurate and structured manner. In one embodiment, the system may employ a Database Management System (DBMS) based on graph databases, which are designed to efficiently store and manage interconnected data. Unlike traditional relational databases that rely on rigid table structures, graph databases provide a flexible node-and-edge model, allowing for fast traversal of dependencies and relationships within the codebase. This makes them particularly well-suited for representing software architectures, where understanding function dependencies, module interactions, and hierarchical structures is critical.

The graph structure may facilitate complex querying, allowing users to analyse relationships between functions, modules, and architectural components with greater depth. Additionally, this database management system (DBMS) may support vector search capabilities, enabling seamless integration of the stored graph into a frontend application facilitating the implementation of Retrieval-Augmented Generation (RAG). By leveraging the graph's structure, the system may provide a Large Language Model (LLM) as part of a RAG system with a richer, more contextualized understanding of the codebase, allowing it to traverse neighbouring nodes and access GenAl-generated summaries at various levels of abstraction.

In an embodiment, parsing the one or more source code files to generate the one or more trees is based on an Abstract Syntax Tree (AST) parser, such as Tree-sitter, to extract a structured representation of the code. An AST captures the syntactic structure of a source code file by organising code entities (e.g. functions, classes, variables, expressions, loops, and control flow statements) into a hierarchical tree representation.

Each tree node in the AST may represent a specific syntactic construct (e.g. expression, statement, function classes, modules, etc.) while the edges represent parent-child relationships that define how these constructs are nested and structured within the source code. Therefore, instead of treating the retrieved code as plain text, the system may utilise language-specific parsers to leverage the intrinsic structure of the code for more accurate analysis.

In an embodiment, the parsing further comprises pruning the one or more generated trees to obtain the filtered subset of tree nodes, wherein pruning is based on filtering out tree nodes that represent syntactic constructs that do not affect functional behaviour or execution semantics of the source code including annotations, import statements, comments, whitespaces, debugging statements.

By selectively filtering nodes based on predefined categories, the system ensures that only relevant syntactic constructs are incorporated into the dependency graph, facilitating efficient analysis and representation of the source code.

In an embodiment, the behavioural context is determined based on static code analysis, symbol resolution, and/or cross-referencing of symbols and dependencies within the codebase to establish functional relationships and usage patterns. Behavioural context may describe how a function or component interacts within the execution flow, capturing function calls, API invocations, class dependencies, and control structures, function location within the codebase, etc. The behavioural context may establish runtime dependencies, such as which functions rely on external modules, whether a method is overridden, or whether a function serves as an entry point in the software of the codebase.

In an embodiment, the behavioural context further comprises utilizing a Language Server Protocol, LSP, client to extract further metadata associated with the one or more tree nodes, the metadata including information related to function interactions, execution flow, and code dependencies.

LSP can identify occurrences of a function invocation, even across different modules and/or source code files. Symbol resolution allows LSP to locate function and variable definitions, including those in dynamically imported modules or large projects with multiple source code files. Additionally, type inference enables the extraction of return types, parameter structures, and class hierarchies, aiding in the analysis of polymorphic behaviour and method overloading. Real-time code navigation data, such as call hierarchy tracking and function invocation references, further refines the dependency graph by clarifying execution order and data flow.

By integrating LSP-driven behavioural context with AST-based structural analysis, the system constructs a comprehensive representation of code entities by utilizing a dependency graph associated with metadata, capturing relationships between functions, classes, modules, variables, and other syntactic constructs to improve code comprehension accuracy.

In an embodiment, generating summaries is performed using one or more generative Al models configured to process the one or more graph nodes, their associated metadata and summaries of previously processed dependent graph nodes to generate a natural-language-based representation of the codebase.

This recursive approach ensures that each graph node's summary is not only derived from its own associated metadata-such as function signatures, docstrings, and references-but also incorporates contextual information from the summaries of other graph nodes it interacts with. For instance, if a function node in the dependency graph calls another function, the summary of the called function is recursively included in the calling function's summary, creating a hierarchical and dependency-aware representation of the source code. As a result, higher-level nodes, such as modules, services, or higher level functions (i.e., nodes closer to the root in the tree) contain aggregated metadata that reflects the structure, behaviour and functionality of their dependent graph nodes.

In an embodiment, the generative Al model is a pre-trained large language model, including but not limited to Llama, Mistral, GPT-based architectures.

In an embodiment, wherein the summaries are generated recursively for graph nodes, beginning with nodes that have the fewest dependencies within the dependency graph.

In an embodiment, associating one or more dependency graph nodes with the metadata further comprises classifying the one or more dependency graph nodes into a set of predefined architectural categories and incorporating the classification into the metadata associated with the graph node.

In an embodiment, the classification is determined by analysing the role and/or function of a graph node within the codebase, using predefined categories such as, but not limited to "API Endpoint", "Database Adaptor", "Frontend Component", and "External System Adaptor", "Business Logic".

This classification may allow the system to distinguish between different types of components, such as controller functions, service methods, utility modules, data access layers, ensuring that each node is understood not only in isolation but also within the broader context of the software architecture within the code retrieved from the version control system (VCS) or the source code repository.

In a further aspect, the embodiments may relate to a computer program product comprising software code portions configured for, when run in the memory of a computer, executing the method steps as described above.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the drawings

**Fig. 1** depicts a method for organising a codebase comprising one or more source code files according to an embodiment;
**Fig. 2** illustrates a schematic of a system for retrieving, parsing, and analysing source code files to generate structured representation according to an embodiment;
**Fig. 3** illustrates a flow diagram of a method for organising a codebase comprising one or more source code files;
**Fig. 4** illustrates an example workflow, according to an embodiment, for extracting, analysing, and organising one or more source code files from a codebase into a dependency graph with associated metadata;
**Fig. 5** illustrates an example of two ASTs corresponding to two separate source code files within the same repository;
**Fig. 6** illustrates an example of two python modules and their associated AST representations;
**Fig. 7** illustrates a graph-dependency representation of function dependencies and their associated summaries, for the python modules depicted in **Fig. 6;**
**Fig. 8** illustrates an example interaction workflow between a developer and the organised codebase representation, according to an embodiment;
**Fig. 9** is a block diagram illustrating exemplary data processing systems described in this disclosure.

### Detailed description

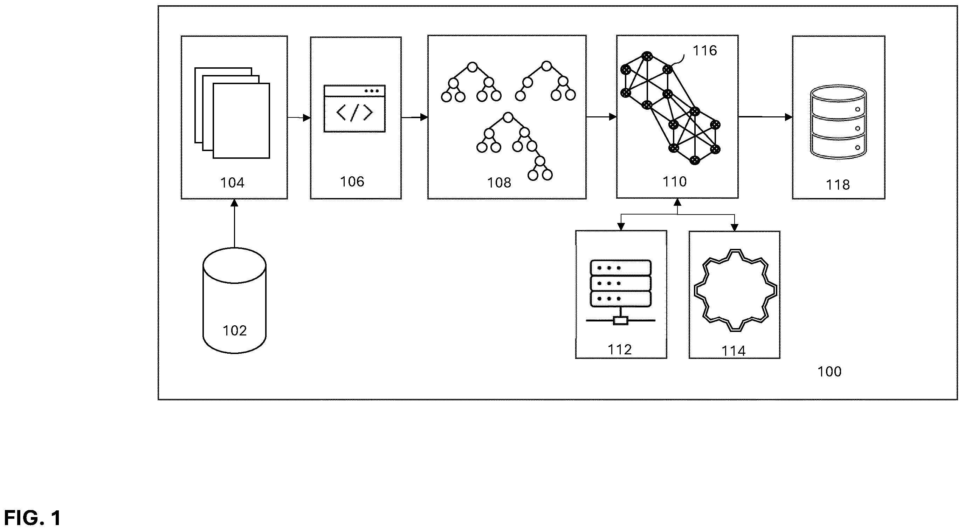

**Fig. 1** illustrates a method for organising a codebase **102** comprising one or more source code files **104,** according to an embodiment. The method comprises parsing **106** the one or more source code files and generating one or more trees **108,** wherein each tree comprises nodes representing different syntactic categories, including at least one of function definitions, expressions, statements, class definitions, or module definitions. Parsing may be performed using one or more language-specific parsers.

Each tree is traversed to extract metadata **112** for one or more nodes within the tree and to construct a dependency graph **110,** the dependency graph comprising one or more graph nodes. The one or more graph nodes may be associated with the extracted metadata, comprising behavioural context for that dependency graph node. The dependency graph nodes associated with metadata are represented as dark grey nodes in block **110** of **Fig. 1****.** A summary is generated for one or more dependency graph nodes using one or more generative Al models **114.** This process recursively integrates the metadata of the current node along with the summaries of its dependent nodes, where dependent nodes are those within the graph that the current node interacts with. The codebase is then organized based on the generated summaries, which are stored in a structured repository **118.** This repository preserves the relationships and contextual information of the codebase elements as defined by the graph nodes.

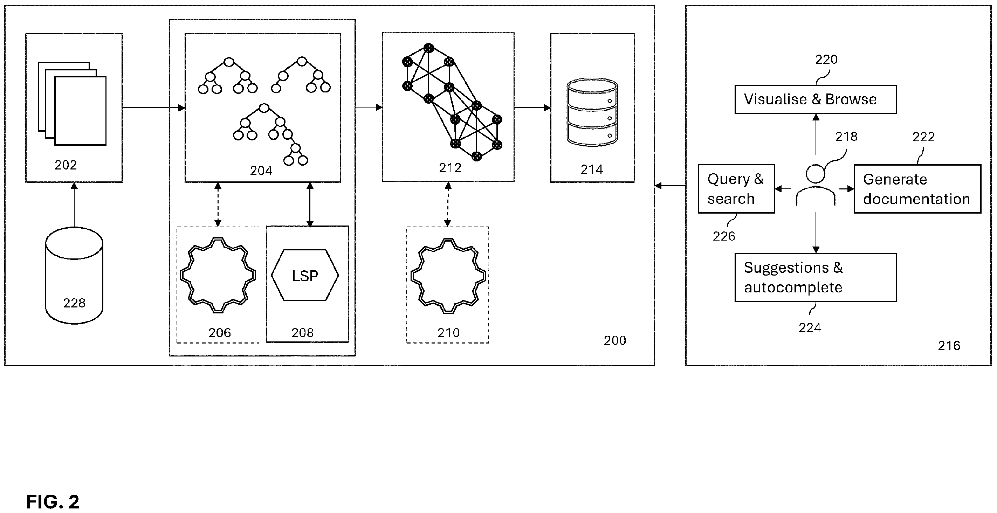

**Fig. 2** depicts a schematic of a system for organising a codebase comprising one or more source code files. In an embodiment, the system may retrieve and access one or more source code files **202** from a version control system (VCS) or a source code repository **228** as illustrated in **Fig. 2****.** The source code repository can be a file archive and web hosting platform that securely stores large volumes of source code files, either privately or publicly. These source code files may be written in different programming languages and follow diverse paradigms, such as object-oriented, functional, or procedural programming. The source code files may contain various software components, including functions, classes, modules, interfaces, scripts, configuration files, and dependency specifications. Additionally, the source code files may originate from a variety of domains such as web development, desktop applications, and scientific computing, mobile app development, data analytics, artificial intelligence, embedded systems, and enterprise software. Each domain may have distinct programming languages, frameworks, and architectural patterns, contributing to the diversity and complexity of the source code repository.

To enable a unified analysis across heterogeneous codebases, the system of **Fig. 2** parses the retrieved source code files to generate one or more trees, such as Abstract Syntax Trees (ASTs), as shown in block **204.**

An AST captures the syntactic structure of a source code file by organising code entities (e.g. functions, classes, variables, expressions, loops, and control flow statements) into a hierarchical tree representation.

Each tree node in the AST may represent a specific syntactic construct (e.g. expression, statement, function classes, modules, etc.) while the edges represent parent-child relationships that define how these constructs are nested and structured within the source code.

Thus, each AST represents the hierarchical structure of the code, including function definitions, function calls, expressions and controls structures. However, it does not represent the runtime execution flow.

This hierarchical organisation allows for efficient traversal and analysis, enabling operations like static code evaluation, dependency resolution, and code transformation. Unlike processing code as raw text, an AST may eliminate redundant syntax elements (e.g., parentheses, semicolons, indentation) and focuses on the intrinsic logical structure of the code. Therefore, instead of treating the retrieved code as plain text, the system may utilise language-specific parsers to leverage the intrinsic structure of the code for more accurate analysis.

In an embodiment, the code parser may be Tree-Sitter (Brunsfeld, M. (2021). Tree-sitter: A parser generator tool and incremental parsing library, https://tree-sitter.github.io/ ) which allows parsing multiple languages with incremental updates and efficient AST traversal. Other AST parsers may be implemented using ANTLR (Another Tool for Language Recognition), python's **ast** module, Esprima or Acorn for JavaScript. For C/C++ static analysis and code transformation, Clang's LibTooling or GCC's intermediate representations (GIMPLE/GENERIC) may be leveraged. In another embodiment, multiple AST parsers may be integrated, to enable language-agnostic processing of the one or more source code file and generation of one or more ASTs.

Once an AST representation of the one or more source code files is generated, a dependency graph **212** may be constructed by traversing the one or more ASTs to extract metadata for a filtered subset of tree nodes within the AST and constructing a dependency graph, wherein filtering may be based on node categories. This process involves identifying tree nodes corresponding to specific syntactic categories within the AST (e.g., function nodes) and associating the identified nodes with metadata that comprises at least behavioural context for each node. Various traversal algorithms may be used for the AST traversal including dept-first search (DFS) and breadth-first search (BFS). In an embodiment, the post-order traversal is employed to associate the dependency graph with metadata at various levels of abstraction in the graph (e.g., functions, classes, packages). The post-order traversal ensures that the traversal starts with the leaf nodes in the tree. In another embodiment, the traversal algorithm may start from tree nodes with the lowest dependency in the tree.

By selectively filtering nodes based on predefined categories, the system ensures that only relevant syntactic constructs are incorporated into the dependency graph, facilitating efficient analysis and representation of the source code.

The metadata may further include function names, parameters, return types, access modifiers, annotations, dependencies, invocation relationships, control flow information, and documentation comments. In addition to extracting structural context from the AST, behavioural context may be derived based on static code analysis, symbol resolution, and cross-referencing of symbols and dependencies within the codebase to establish functional relationships and usage patterns. Static code analysis examines the code without execution to extract structural and behavioural information, including control flow, function calls, and data dependencies. Symbol resolution maps identifiers-such as function names, variables, and classes-to their corresponding definitions, ensuring accurate tracking of their scope, type, and linkage across the codebase. Cross-referencing of symbols further establishes functional relationships by identifying where symbols are declared, referenced, and invoked, enabling deeper insights into code dependencies and interactions.

In an embodiment, behavioural context may be derived using Language Server Protocol (LSP) **208** calls to enhance comprehension of function interactions, execution flow, and dependencies across a codebase. Therefore, in an embodiment, a Language Server Protocol (LSP) client may be used to extract metadata associated with one or more tree nodes, the metadata including information related to function interactions, execution flow, and code dependencies.

LSP can identify occurrences of a function invocation, even across different modules and/or source code files. Symbol resolution allows LSP to locate function and variable definitions, including those in dynamically imported modules or large projects with multiple source code files. Additionally, type inference enables the extraction of return types, parameter structures, and class hierarchies, aiding in the analysis of polymorphic behaviour and method overloading. Real-time code navigation data, such as call hierarchy tracking and function invocation references, further refines the dependency graph by clarifying execution order and data flow.

By integrating LSP-driven behavioural context with AST-based structural analysis, the system constructs a comprehensive representation of code entities by utilizing a dependency graph associated with metadata, capturing relationships between functions, classes, modules, variables, and other syntactic constructs to improve code comprehension accuracy.

In an embodiment, generative Al (GenAl) models may be used to further enrich the metadata with before invoking LSP calls generating preliminary summaries for each node in the dependency graph, as shown in block **206.** The GenAl models may be used with customized prompts.

In another embodiment, the metadata may be further enriched by classifying one or more graph nodes into predefined architectural categories based on their role and function within the codebase. The classification may be determined by analysing the role and/or function of a node within the codebase, using predefined categories such as, but not limited to "API Endpoint", "Database Adaptor", "Frontend Component", and "External System Adaptor", "Business Logic".

This classification may allow the system to distinguish between different types of components, such as controller functions, service methods, utility modules, data access layers, ensuring that each node is understood not only in isolation but also within the broader context of the software architecture within the code retrieved from the version control system (VCS) or the source code repository. The classification may be derived automatically using docstrings, function signatures, or naming conventions through Natural Language Processing (NLP) techniques and machine learning models trained on labelled datasets. Alternatively, the classification may be manually defined by developers, architects, or through predefined configuration files, allowing for greater control over how different components are categorized within the system.

In another embodiment, GenAl models (e.g large language models, LLMs), preferably with customized prompts may be used to further enrich the metadata of graph nodes after LSP calls have been invoked **210.** This metadata enrichment process involves generating a summary for one or more graph nodes using one or more GenAl models by recursively integrating the metadata of the current node and summaries of its dependent nodes, wherein dependent nodes represent nodes within the graph that the current node interacts with, such as nodes connected by a graph edge representing relationships like dependency, function calls, or other structural associations.

In one embodiment, summaries are generated recursively for the tree nodes, starting from those with the lowest dependency in the tree.

Thus, generating summaries may be performed using one or more GenAl models configured to process the one or more dependency graph nodes, associated metadata and summaries of previously processed dependent nodes to output a natural-language-based representation of the codebase.

This recursive approach ensures that each node's summary is not only derived from its own associated metadata-such as function signatures, docstrings, and references-but also incorporates contextual information from the summaries of other nodes it interacts with. For instance, if a function node in the dependency graph calls another function, the summary of the called function is recursively included in the calling function's summary, creating a hierarchical and dependency-aware representation of the source code. As a result, higher-level nodes, such as modules, services, or higher level functions (i.e., nodes closer to the root in the tree) contain aggregated metadata that reflects the structure, behaviour and functionality of their dependent nodes.

Step **214** involves organising the codebase based on the generated summaries, wherein the generated summaries are stored in a structured repository that preserves the relationships and context of the codebase elements defined by the graph nodes. In one embodiment, the system may employ a Database Management System (DBMS) based on graph databases, which are designed to efficiently store and manage interconnected data. Unlike traditional relational databases that rely on rigid table structures, graph databases provide a flexible node-and-edge model, allowing for fast traversal of dependencies and relationships within the codebase. Additionally, graph databases support indexed and searchable relationships, enabling efficient querying and retrieval of relevant code components based on structural and contextual connections. This graph databases them particularly well-suited for representing software architectures, where understanding function dependencies, module interactions, and hierarchical structures is critical.

As an example of graph databases that may be used for storing the generated summaries, Neo4j, ArangoDB, JanusGraph, and TigerGraph provide efficient storage and management of both the structural context within the codebase and the metadata enriched through LSP calls and GenAl-generated summaries. In these databases, nodes may represent syntactic constructs such as functions, classes, or modules, while edges capture relationships such as function calls, imports, and dependencies. This structured representation ensures that the logical and contextual connections between components are preserved, allowing each generated summary to remain linked to its corresponding syntactic construct within the dependency graph.

Once stored in a graph database, the organised codebase enables developers and business stakeholders to interact with the codebase in an fast, accurate and structured manner. The graph structure may facilitate complex querying, allowing users to analyse relationships between functions, modules, and architectural components with greater depth. Additionally, this database management system (DBMS) may support vector search capabilities, enabling seamless integration of the stored graph into a frontend application facilitating the implementation of Retrieval-Augmented Generation (RAG). By leveraging the graph's structure, the system may provide a Large Language Model (LLM) as part of a RAG system with a richer, more contextualized understanding of the codebase, allowing it to traverse neighbouring nodes and access GenAl-generated summaries at various levels of abstraction.

In this approach, the retrieval component of RAG dynamically pulls relevant nodes in response to a user's query **226,** while the LLM further traverses the stored graph to gather deeper contextual information from related components. For example, when a user is querying "how is data validation handled before processing a payment?", a traditional codebase search might only return direct references to input validation functions and error-handling logic within the payment module. However, by leveraging metadata including behavioural, structural and functional context within the graph, the system can also retrieve information about dependent authentication checks, encryption methods, and logging mechanisms associated with the validation process. This allows an LLM in a RAG application to generate a more comprehensive and context-aware explanation, improving code exploration and developer insights.

Beyond enhancing search and retrieval, organising the codebase and metadata within a structured, DBMS, which is, such as a graph or vector database, may facilitate automated documentation generation **222** by allowing efficient querying, contextual linking, and structured retrieval of relevant information caused by the now structured codebase. Moreover, the system can offer intelligent code suggestions, predictive refactoring recommendations **224,** and impact analysis, helping development teams assess the consequences of modifying specific functions or modules.

Additionally, the graph-based organisation of the codebase comparison code summaries may facilitate intuitive browsing and visualization of the codebase **220,** allowing developers and other stakeholders to explore function dependencies, module interactions, and architectural hierarchies through graph-based views, interactive diagrams, or knowledge graphs. By leveraging graph traversal and advanced querying, developers can navigate complex code structures more effectively, gaining deeper insights into system's behaviour and dependencies and architectural patterns in a visual and interactive manner.

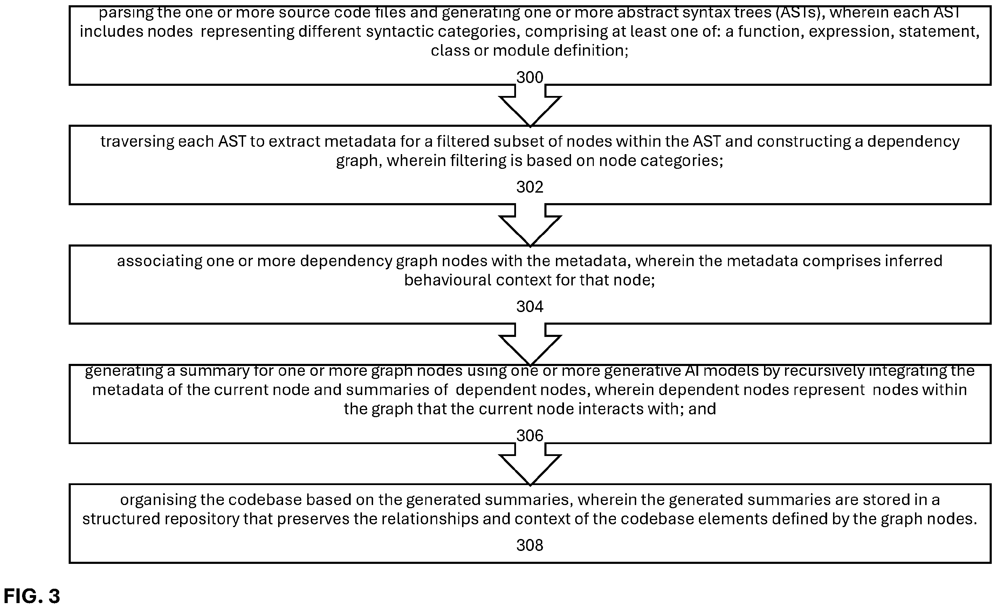

**Fig. 3** illustrates a flow diagram of a method for organising a codebase comprising one or more source code files.

The method may begin with parsing the one or more source code files and generating one or more trees, such as abstract syntax trees (ASTs), as shown in step **300,** wherein each AST may include tree nodes representing different syntactic categories, comprising at least one of: a function, expression, statement, class, or module definition.

Next, the method proceeds to traversing each AST to extract metadata for a filtered subset of tree nodes within the AST and constructing a dependency graph, illustrated in step **302,** wherein filtering may be based on syntactic categories of the nodes. In step **304,** the method includes associating one or more dependency graph nodes with the metadata, wherein the metadata comprises at least information about behavioural context for that graph node.

Following this, step **306** involves generating a summary for one or more graph nodes using one or more generative Al models by recursively integrating the metadata of the current node and summaries of dependent graph nodes, wherein dependent graph nodes represent nodes within the graph that a current node interacts with.

Finally, in step **308,** the method includes organising the codebase based on the generated summaries, wherein the generated summaries are stored in a structured repository that preserves the relationships and context of the codebase elements defined by the graph nodes.

This method enables the systematic structuring of the codebase by leveraging AST analysis, dependency graph construction, metadata association, and GenAl-driven summarization, ensuring efficient code organisation and enhanced comprehension.

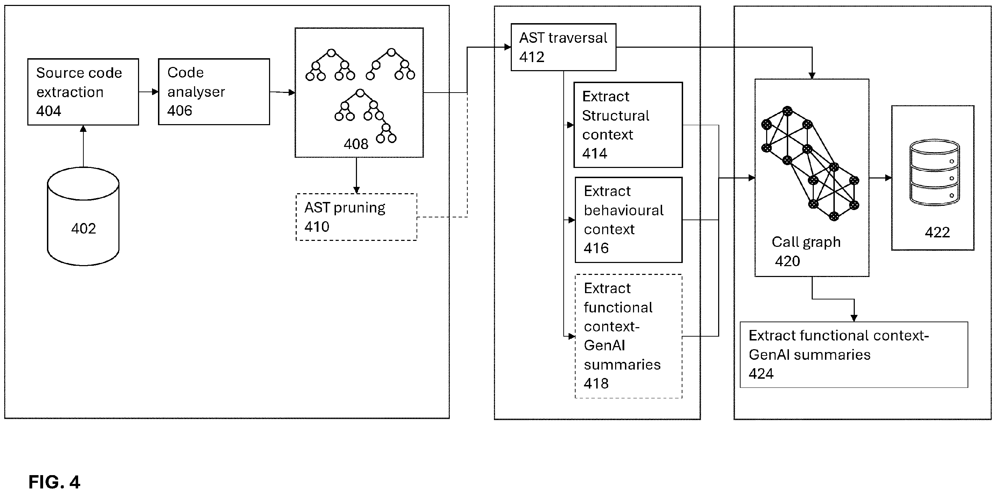

**Fig. 4** illustrates an example workflow, according to an embodiment, for extracting, analysing, and organising one or more source code files from a codebase into a dependency graph with associated metadata. The dependency graph and metadata may be stored in a structured database **422** for further processing and querying. In the codebase organisation process, a source code extraction module **404** extracts one or more source code files from a source code repository **402.** A code analyser module **406** that may leverage a code parser, a front-end compiler or a language compiler may parse the extracted code files to generate one or more ASTs, as illustrated in step **408.** In an embodiment, multiple AST parsers may be integrated, to enable language-agnostic processing of the one or more source code file and generation of one or more ASTs.

To enhance the accuracy and relevance of the generated AST, AST pruning **410** may be performed to remove redundant, irrelevant, or unnecessary syntactic constructs that do not affect functional behaviour or execution semantics of the source code. This step ensures that only the most meaningful nodes remain in the AST, making downstream processing more efficient and accurate. For example, AST pruning may eliminate unreachable code, such as conditional branches that will never execute (e.g., if false { ... }). It may also eliminate syntactic sugar, such as implicit type conversions or shorthand function calls that do not alter program behaviour. Redundant parentheses or no-op statements may be pruned as well, simplifying expressions like ((x + y)) to x + y. Additionally, inline comments and whitespace nodes, while useful for readability, may be discarded since they have no impact on execution. Also, debugging statements, such as print("debug") or logging calls, may be removed as they are not required for static analysis, ensuring that only essential syntactic constructs remain in the AST.

By removing unnecessary elements, AST pruning may optimize storage, improve processing efficiency, and enhance dependency graph generation, allowing subsequent behavioural and functional context metadata extraction to focus on the most relevant code structures.

In an embodiment, AST traversal module **412** traverses the one or more generated ASTs, each AST being optionally refined through pruning, to build a dependency graph and to associate the graph nodes with metadata. This process involves identifying tree nodes corresponding to specific syntactic categories within the AST (e.g., function nodes, class declarations, method invocations) and associating the identified nodes with metadata that comprises at least behavioural context for the identified node. By focusing on relevant syntactic constructs, the system ensures that only semantically relevant components contribute to the graph representation of the codebase while filtering out redundant or structurally insignificant nodes. In one embodiment the AST traversal **412** may apply a filtering mechanism, selecting a subset of nodes based on predefined syntactic construct category.

Once the filtered AST nodes are identified, each node in the dependency graph may be associated with metadata, where the metadata comprises behavioural **414,** structural **414** and functional **418** context of that node. The structural context may be derived directly from AST traversal **412** and represents the hierarchical relationships between syntactic code constructs, such as function nesting, class inheritance, module imports, and dependency structures. The behavioural context extraction module may invoke LSP calls to retrieve static and dynamic metadata about the execution behaviour of each node in the one or more ASTs. Behavioural context may describe how a function or component interacts within the execution flow, capturing function calls, API invocations, class dependencies, and control structures, function location within the codebase, etc. The behavioural context may establish runtime dependencies, such as which functions rely on external modules, whether a method is overridden, or whether a function serves as an entry point in the software of the codebase.

One or more GenAl models, such as LLMs may be used to infer the functional context **418** of each graph node during AST traversal based on its name, signature, inline documentation, and structural placement within the AST.

Additionally, the functional context metadata may be enriched with generated GenAl natural language summaries, providing high-level descriptions of each function's purpose and contextualizing its role within the broader software architecture, after the AST traversal **424.** The GenAl summarization process is recursive, wherein a summary for one or more graph nodes using one or more GenAl models, continuously integrates the metadata of the current node along with the summaries of its dependent nodes. Dependent nodes represent nodes within the graph that the current node interacts with. This recursive approach allows for progressive refinement, where higher-level nodes accumulate aggregated functional, structural and behavioural context from their dependencies, leading to comprehensive and semantically rich representations of the codebase.

Finally, the constructed call graph **420** along with generated summaries may be stored in a structured database **422,** enabling further analysis, querying, and retrieval. This organised representation may allow developers to visualize dependencies, generate automated documentation, and leverage Al-driven insights for code maintenance, refactoring, and impact analysis.

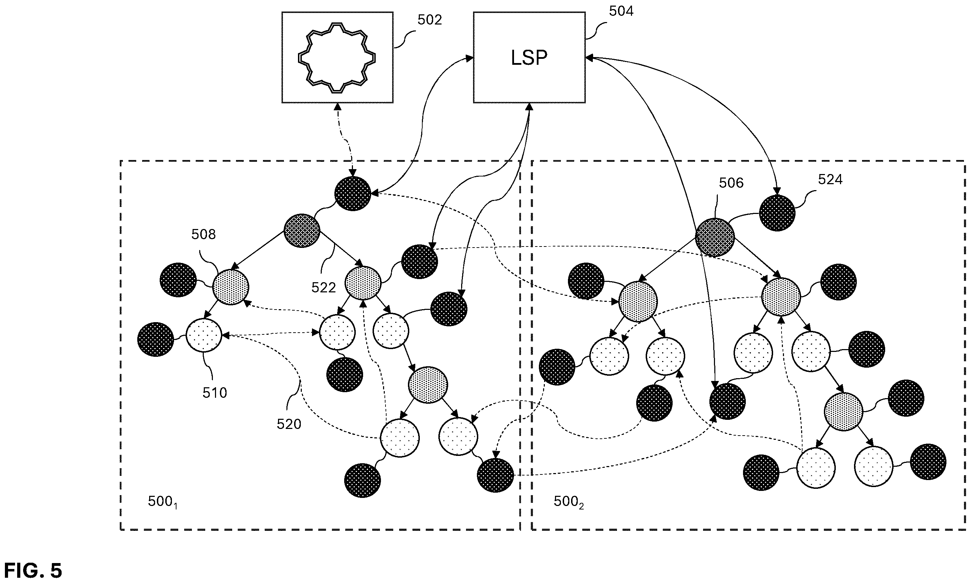

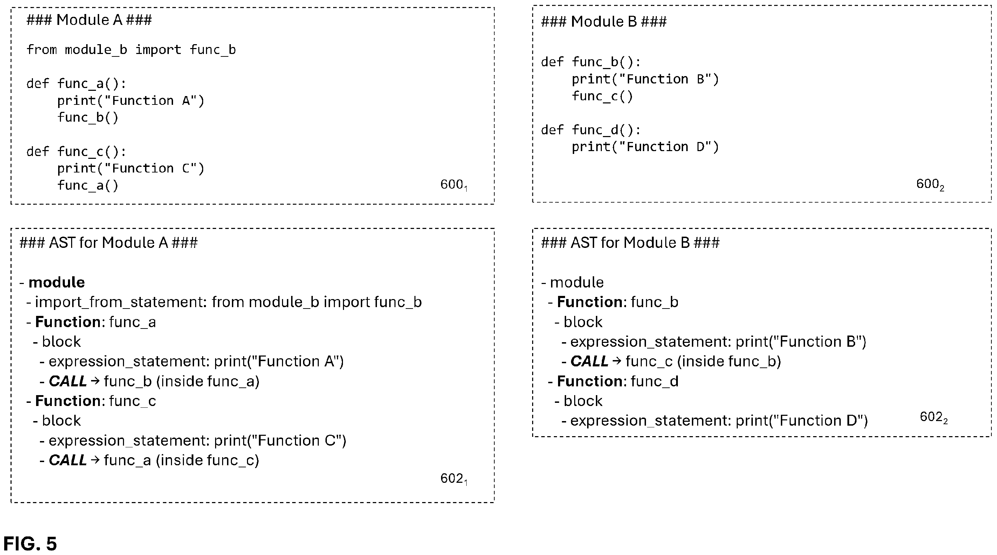

**Fig. 5** illustrates an example of two ASTs corresponding to two separate source code files within the same repository, represented as the ASTs in blocks **500₁** and **500₂.** Each AST represents the hierarchical organisation of the source code within the source code file, illustrating the relationships among various code entities, where different tree nodes **506, 508, 510** correspond to distinct code entities such as packages (e.g. **506**), modules (e.g. **508**), functions (e.g. **510**), and variables (e.g. **510**). The arrows between tree nodes indicate relationships such as function calls, dependencies, or variable references. The solid arrows, such as **522** may indicate direct structural relationships within the AST, such as parent-child relationship (e.g., a function belonging to a module, a variable declared within a function). These connections define the hierarchical structure of the source code. The dashed arrows may represent non-hierarchical or cross-referencing relationships, such as function calls, variable references, or dependencies across different parts of the AST. These could indicate that one node uses or interacts with another node, even if they are not in a strict parent-child relationship or in the same source code file.

An LSP **504** may be used to retrieve metadata including behavioural context for one or more AST nodes by analysing static and dynamic properties of the code. Similarly, a GenAl module **502** may provide natural language generated functional summaries based on function names, signatures, and relationships. These two sources of metadata-LSP-based behavioural context and GenAl-inferred functional context-are integrated to enhance the understanding of each AST node.

Additionally, the functional context metadata may be enriched with generated GenAl natural language summaries **502,** providing high-level descriptions of each function's purpose and contextualizing its role within the broader software architecture, after the AST traversal and dependency graph construction, as further explained in **Fig. 4****.** The GenAl summarization process is recursive, wherein a summary for one or more graph nodes using one or more GenAl models continuously integrates the metadata of the current graph node along with the summaries of its dependent nodes. This recursive approach allows for progressive refinement, where higher-level within the AST nodes accumulate aggregated metadata including functional, structural, and behavioural context from their dependencies, leading to comprehensive and semantically rich representations of the codebase.

By organising the codebase based on the GenAl generated summaries, where these summaries are stored in a structured repository that maintains the relationships and contextual information of the codebase elements as defined by the graph nodes, a structured and enriched understanding of the codebase is achieved, enabling advanced search, documentation, and impact analysis of the codebase.

**Fig. 6** illustrates an example of an AST representations for two interconnected Python modules, Module A and Module B. The figure consists of two main sections: the actual source code of both modules **600₁** and **600₂** and their corresponding AST structures shown in blocks **602₁** and **602₁.**

As shown in **Fig. 6,** Module A imports func_b from Module B and defines two functions, func_a() and func_c(), where func_a() calls func_b(), and func_c() calls func_a(). Similarly, Module B defines two functions, func_b() and func_d(), with func_b() making a call to func_c().

Below the source code modules **600₁** and **600₂,** the AST representation for each module captures the syntactic structure of the code in a hierarchical format. The AST for Module A includes the import statement and function definitions while also identifying function calls such as func_b being invoked inside func_a() and func_a being invoked inside func_c(). The AST for Module B follows a similar structure, detailing function definitions and recording function calls such as func_c inside func_b().

In the AST examples shown in blocks **602₁** and **602₁** in **Fig. 6,** both ASTs may be generated using Tree-sitter as the AST parser and subsequently pruned to focus on function definitions and function calls, while removing lower-level syntactic details that do not contribute to the structural representation of functions or their call relationships, as further described in **Fig. 4****,** module **410.** The unpruned Tree-sitter AST captures all syntactic constructs in a highly detailed manner; however, pruning the AST refines this representation by removing non-essential nodes, ensuring that only the most relevant structural syntactic constructs are retained. The specific syntactic constructs preserved through pruning may be customized based on the requirements of a given application.

This optimization reduces unnecessary complexity in the AST, thereby improving processing efficiency and enhancing the accuracy of downstream analysis, including the construction of the dependency graph.

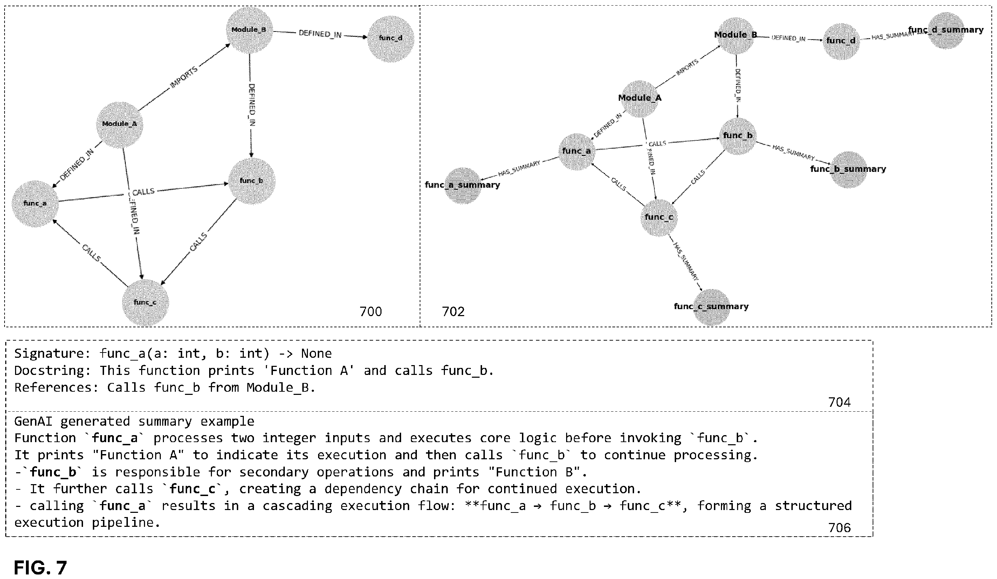

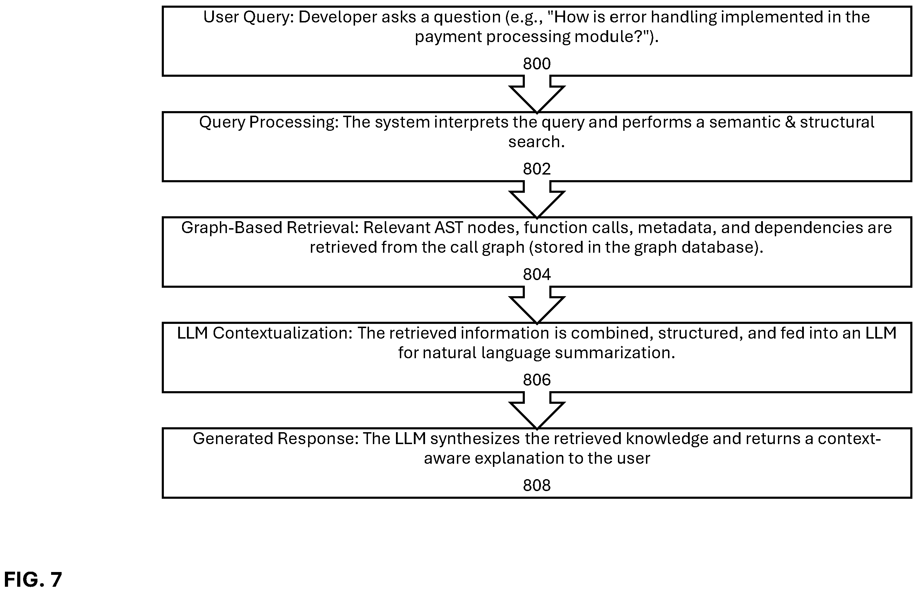

**Fig. 7** illustrates a graph-dependency representation of function dependencies and their associated summaries, extending the AST-based representation of Module A and Module B shown in **Fig. 6.**

The left section of **Fig. 7****,** specifically, block **700** depicts a dependency graph derived from the AST representation of the modules in blocks **602₁** and **602₁** presented in **Fig. 6,** capturing function relationships across Module_A and Module_B. Each node in the graph represents either a function (func_a, func_b, func_c, and func_d) or a module (Module_A and Module_B), while the directed edges denote relationships such as CALLS, IMPORTS, and DEFINED_IN. This graph dependency representation captures the execution flow across modules, illustrating how func_a in Module A calls func_b in Module B, which subsequently invokes func_c, creating a chain of dependent function executions.

The function dependency graph depicted in **Fig. 7****,** block **700,** may be generated using AST traversal, LSP calls, or a combination of both techniques to provide a comprehensive representation of function relationships within the codebase. Constructing a dependency graph based on AST-traversal enables the identification of function definitions, call expressions, and module imports, facilitating the construction of a static dependency graph that captures explicitly defined function call relationships. However, AST traversal is inherently limited to syntactic dependencies and may not account for dynamically resolved function calls or cross-file references. To enhance accuracy, LSP-based calls may be employed to retrieve real-time semantic information, resolving symbol references, aliasing, and inter-module dependencies (e.g. the call to func_b in Module A, func_b being defined in Module B).

By leveraging LSP calls, the dependency graph may incorporate execution relationships that are not explicitly represented in the AST, thereby enabling a more context-aware and accurate representation of the codebase. A hybrid approach that combines AST traversal with LSP-derived metadata may generate a comprehensive dependency graph, which not only enables an enhanced code comprehension but also serves as an organised representation of the codebase. This organised representation facilitates the generation of more accurate, context-aware code summaries by incorporating both structural and behavioural relationships within the codebase.

The **702** block of **Fig. 7** builds upon this dependency graph by integrating extracted metadata and generated summaries based on one or more GenAl models into the dependency graph. Each function node (func_a, func_b, func_c, and func_d) may be linked to a corresponding summary node (func_a_summary, func_b_summary, etc.), illustrated by a HAS_SUMMARY relationship in the **702** graph. These summaries may include behavioural and functional context associated with a given graph node, providing a more comprehensive representation of the codebase beyond its structural representation. The metadata used to generate these summaries may comprise LSP-extracted behavioural context, capturing dynamic function interactions, and GenAl-derived functional summaries, which leverage GenAl models to generate natural language summaries based on function names, signatures, and dependencies. This associated metadata may enhance code comprehension, impact analysis, and automated documentation by incorporating both structural and behavioural context into the dependency graph.

Section **704** in **Fig. 7** presents an example of metadata that may be obtained through LSP calls, providing behavioural context information about the function func_a. The signature of func_a, including its parameter types and return type, may be retrieved using an LSP /*signatureHelp* request, allowing developers to understand the function's expected inputs and outputs. The docstring, which describes the function's behavior, may be obtained through an LSP /*hover* request, offering insight into its execution logic. Additionally, the references indicating that func_a calls func_b from Module_B may be extracted using an LSP /*references* call, which resolves cross-file dependencies and function invocations. This extracted metadata may be integrated in the dependency graph as part of the generated summaries (i.e., func_a_summary) and may be further used by the one or more GenAl models to generate natural language summaries of a given graph node.

Section **706** depicts an example of a generated summary using a GenAl model, which may recursively integrate extracted metadata of a given graph node (e.g. func_a node) with summaries of dependent nodes. This process enables the generation of a structured, context-aware summary that captures function execution flows, such as func_a invoking func_b, which subsequently calls func_c. The summarization methodology builds upon the AST generation and pruning and dependency graph construction further described in **Fig. 6.**

The outcome of the described system is an organised and enriched representation of the codebase, where generated summaries are systematically integrated into a structured repository, such as a DBME implemented as a graph database. This structured repository retains and preserves the relationships and contextual information of the codebase, as defined by the dependency graph nodes and their corresponding summaries and metadata, ensuring that function definitions, call relationships, and module dependencies are accurately captured.

**Fig. 8** illustrates a possible interaction workflow between a developer and the organised codebase representation, similar to the one described with reference to **Fig. 5-7****,** enabling a query-and-answer process that leverages graph-based retrieval and LLM-based summarization. The system processes developer queries by retrieving relevant nodes, dependencies, and metadata comprising summaries from the structured graph-based representation and generating context-aware, natural language summaries using an LLM model.

In the example of **Fig. 8,** a developer initiates a query **800,** such as asking how a specific functionality, like error handling, is implemented in a particular module. The system then processes the query, step **802,** by performing a semantic and structural search within the codebase representation, which is maintained as a structured repository. This repository may be implemented using a graph database, such as the one described in reference to **Fig. 7****.** To retrieve relevant information, the system queries the graph database, step **804.** The query may extract graph nodes, nodes dependencies, and metadata together with generated summaries from the graph-based representation of the codebase.

After retrieving the relevant code elements (i.e., graph nodes) from the graph database in response to the user query, the system contextualizes them by associating them with the extracted metadata and/or GenAl-generated summaries linked to the corresponding graph nodes **806.** The graph nodes together with the extracted summaries and the user query may be fed into a Large Language Model (LLM), which synthesizes the retrieved knowledge from the graph database and generates a natural language response **808.** The LLM response may provide the user a context-aware explanation, making it easier for developers to understand complex code dependencies, execution flows, and implementation details.

This interaction model leverages the structured representation of the codebase (as described in previous figures) to enable efficient, automated knowledge retrieval and summarization, improving code comprehension, impact analysis, and searchability.

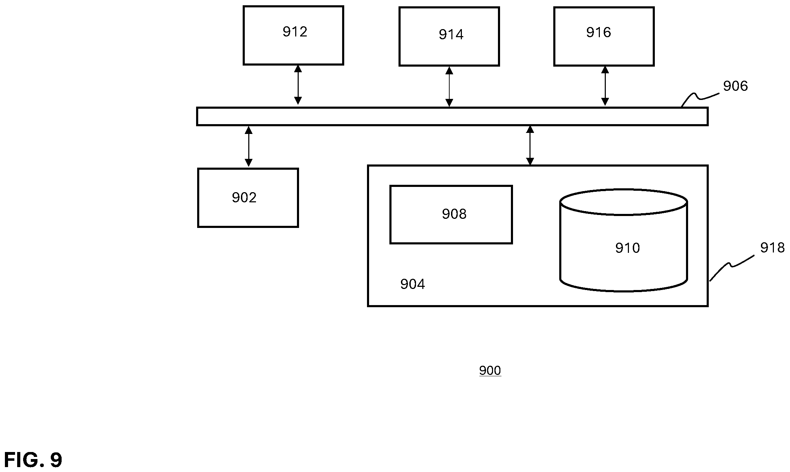

**Fig. 9** is a block diagram illustrating exemplary data processing systems described in this disclosure. Data processing system **900** may include at least one processor **802** coupled to memory elements **904** through a system bus **906.** As such, the data processing system may store program code within memory elements **904.** Further, processor **902** may execute the program code accessed from memory elements **804** via system bus **906.** In one aspect, data processing system may be implemented as a computer that is suitable for storing and/or executing program code. It should be appreciated, however, that data processing system **900** may be implemented in the form of any system including a processor and memory that is capable of performing the functions described within this specification.

Memory elements **904** may include one or more physical memory devices such as, for example, local memory **908** and one or more bulk storage devices **910.** Local memory may refer to random access memory or other non-persistent memory device(s) generally used during actual execution of the program code. A bulk storage device may be implemented as a hard drive or other persistent data storage device. The processing system **900** may also include one or more cache memories (not shown) that provide temporary storage of at least some program code in order to reduce the number of times program code must be retrieved from bulk storage device **910** during execution.

Input/output (I/O) devices depicted as input device **912** and output device **914** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **916** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **900.**

As pictured in **Fig. 9****,** memory elements **904** may store an application **918.** It should be appreciated that data processing system **900** may further execute an operating system (not shown) that can facilitate execution of the application. Application, being implemented in the form of executable program code, can be executed by data processing system **900,** e.g., by processor **902.** Responsive to executing application, data processing system may be configured to perform one or more operations to be described herein in further detail.

In one aspect, for example, data processing system **900** may represent a client data processing system. In that case, application **918** may represent a client application that, when executed, configures data processing system **900** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **918,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

## Claims

1. A computer-implemented method for organising a codebase comprising one or more source code files, the method comprising:
parsing the one or more source code files and generating one or more trees, wherein each tree comprises nodes representing different syntactic categories, including at least one of: function definitions, expressions, statements, class definitions or module definitions, wherein parsing is performed using one or more language-specific parsers;
traversing each tree to extract metadata for one or more nodes within the tree and constructing a dependency graph based on a portion of the extracted metadata, the dependency graph comprising one or more graph nodes and relationships between the graph nodes within the codebase;
associating one or more graph nodes with the extracted metadata, wherein the extracted metadata comprises behavioural context for the corresponding graph node;
generating a summary for one or more graph nodes using one or more generative Al models by recursively integrating the metadata of a current graph node and summaries of dependent graph nodes, wherein dependent graph nodes represent nodes within the dependency graph that the current graph node interacts with; and
organising the codebase based on the generated summaries, wherein the generated summaries are stored in a structured repository that preserves the relationships and context of the codebase elements defined by the graph nodes.

2. The method as claimed in claim 1, wherein parsing the one or more source code files to generate the one or more trees is based on an Abstract Syntax Tree (AST) parser, such as Tree-sitter, to extract a structured representation of the code.

3. The method as claimed in claim 1 or claim 2, wherein parsing further comprises pruning the one or more generated trees to obtain the filtered subset of tree nodes, wherein pruning is based on filtering out tree nodes that represent syntactic constructs that do not affect functional behaviour or execution semantics of the source code including annotations, import statements, comments, whitespaces, debugging statements.

4. The method as claimed in claim 1, wherein the behavioural context is determined based on static code analysis, symbol resolution, and/or cross-referencing of symbols and dependencies within the codebase to establish functional relationships and usage patterns.

5. The method as claimed in claim 4, wherein the behavioural context further comprises utilizing a Language Server Protocol, LSP client, to extract further metadata associated with the one or more tree nodes, the metadata including information related to function interactions, execution flow, and code dependencies.

6. The method as claimed in claim 1, wherein generating summaries is performed using one or more generative Al models configured to process the one or more graph nodes, their associated metadata and summaries of previously processed dependent graph nodes to generate a natural-language-based representation of the codebase.

7. The method as claimed in claim 6, wherein the generative Al model is a pre-trained large language model, including but not limited to Llama, Mistral, GPT-based architectures.

8. The method according to any of the claims 1-7, wherein the summaries are generated recursively for graph nodes, beginning with nodes that have the fewest dependencies within the dependency graph.

9. The method as claimed in claim 1, wherein associating one or more dependency graph nodes with the metadata further comprises classifying the one or more dependency graph nodes into a set of predefined architectural categories and incorporating the classification into the metadata associated with the graph node.

10. The method as claimed in claim 9, wherein classification is determined by analysing the role and/or function of a graph node within the codebase, using predefined categories such as, but not limited to "API Endpoint", "Database Adaptor", "Frontend Component", and "External System Adaptor", "Business Logic".

11. The method as claimed in claim 1, wherein the structured repository storing the generated summaries is based on a graph database or a vector database.

12. Computer program product comprising software code portions configured for, when run in the memory of a computer, executing the method steps according to any of claims 1-11.
